(19) Europäisches Patentamt / European Patent Office / Office européen des brevets

(11) EP 2 065 431 B1

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(51) Int Cl.:
***C08J 3/03*** *(2006.01)* ***C04B 41/49*** *(2006.01)*

(21) Anmeldenummer: **08169309.5**

(22) Anmeldetag: **18.11.2008**

(54) **Wässrige Dispersionen von Organosiliciumverbindungen**

Aqueous Dispersions of Organosilicon Compounds

Dispersions aqueuses contenant de composés à base de silicium organique

(84) Benannte Vertragsstaaten:
**BE DE FR GB NL**

(30) Priorität: **30.11.2007 DE 102007047907**

(43) Veröffentlichungstag der Anmeldung:
**03.06.2009 Patentblatt 2009/23**

(73) Patentinhaber: **Wacker Chemie AG**
**81737 München (DE)**

(72) Erfinder:
- **Rautschek, Holger**
  **01612, Nünchritz (DE)**
- **Ackermann, Hartmut**
  **84489, Burghausen (DE)**

(74) Vertreter: **Budczinski, Angelika et al**
**Wacker Chemie AG**
**Zentralbereich Patente, Marken und Lizenzen**
**Hanns-Seidel-Platz 4**
**81737 München (DE)**

(56) Entgegenhaltungen:
**WO-A-00/34207** **WO-A-01/00309**
**US-B1- 6 294 608**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 065 431 B1

Printed by Jouve, 75001 PARIS (FR)

## Beschreibung

Die Erfindung betrifft wässrige Dispersionen von Organosiliciumverbindungen, deren Herstellung sowie deren Verwendung, insbesondere zur hydrophobierenden Imprägnierung und Massehydrophobierung von mineralischen und organischen Baustoffen.

Silane und Siloxane werden seit langem für den Bautenschutz eingesetzt, z.B. Lösungen von Silanen in organischen Lösungsmitteln wie sie z.B. in DE-A 1069057 beschrieben sind. Aus Kostengründen aber nicht zuletzt auch wegen der gesundheitlichen Gefahren beim Umgang mit organischem Lösungsmittel und der damit verbundenen Umweltbelastung ist das Arbeiten mit organischen Lösungsmitteln nachteilig.

Wässrige Formulierungen auf der Basis von Alkylalkoxysilanen und -siloxanen sind bekannt. EP-A 234 024 beschreibt Silanemulsionen mit nichtionischen Emulgatoren, die einen HLB-Wert von 4 bis 15 aufweisen. Die Stabilität dieser Zusammensetzungen wird laut EP-A 340 816 durch den Zusatz von Puffersalzen verbessert. EP-A 631 999 beschreibt wässrige Formulierungen auf der Basis von Alkylalkoxysilanen, die kationische Emulgatoren enthalten. Nach WO-A 199516752 und EP-A 907 622 sollen Aminseifen besonders für die Herstellung von Silan/Siloxan-Emulsionen geeignet sein. WO-A 199522580 beschreibt eine Reihe weiterer kationischer Emulgatoren in Silan/Siloxan Emulsionen. Nach EP-A 1 147 072 ist die Stabilität von Silan/Siloxan-Emulsionen dann besonders gut, wenn ionische Emulgatoren in Kombination mit nichtionogenen Emulgatoren, die einen HLB-Wert kleiner als 11 haben, verwendet werden.

Dennoch weisen die nach dem Stand der Technik hergestellten wässrigen Bautenschutzmittel nicht immer die gewünschte Stabilität und Wirksamkeit auf.

Gegenstand der Erfindung sind wässrige Dispersionen enthaltend

(A) mindestens eine Organosiliciumverbindung ausgewählt aus

(A1) Silanen der Formel

$$R_aR^2_bSi(OR^1)_{4-a-b} \qquad (I),$$

worin
R gleich oder verschieden sein kann und einwertige, SiC-gebundene, gegebenenfalls substituierte Kohlenwasserstoffreste mit mindestens 4 Kohlenstoffatomen bedeutet,
$R^1$ gleich oder verschieden sein kann und einwertige, gegebenenfalls substituierte Kohlenwasserstoffreste bedeutet,
$R^2$ gleich oder verschieden sein kann und einwertige, SiC-gebundene, gegebenenfalls substituierte Kohlenwasserstoffreste mit 1 bis 3 Kohlenstoffatomen bedeutet,
a 1, 2 oder 3 ist und
b 0, 1 oder 2 ist, mit der Maßgabe, dass die Summe aus a und b 1, 2 oder 3 ist,
und/oder deren Teilydrolysate sowie
(A2) Siloxane enthaltend Einheiten der Formel

$$R^3_c(R^4O)_dSiO_{(4-c-d)/2} \qquad (II),$$

wobei
$R^3$ gleich oder verschieden sein kann und Wasserstoffatom oder einen einwertigen, SiC-gebundenen, gegebenenfalls substituierten Kohlenwasserstoffrest bedeutet,
$R^4$ gleich oder verschieden sein kann und Wasserstoffatom oder einen einwertigen, gegebenenfalls substituierten Kohlenwasserstoffrest bedeutet,
c 0, 1, 2 oder 3 ist und
d 0, 1, 2 oder 3 ist, mit der Maßgabe, dass die Summe aus c und d kleiner oder gleich 3 ist,

(B) mindestens einen nichtionischen Emulgator mit einem HLB-Wert größer oder gleich 12, bevorzugt größer oder gleich 14, gegebenenfalls im Gemisch mit nichtionischen Emulgatoren mit einem HLB-Wert kleiner 12,
(C) mindestens ein kationisches Tensid ausgewählt aus

(C1) Verbindungen der Formel

$$R^9_eR^6_{(4-e)}N^+ X^- \qquad (III)$$

und

(C2) Verbindungen der Formel

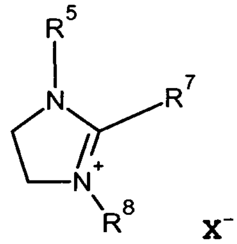

(IV),

wobei
$R^5$ gegebenenfalls substituierte Kohlenwasserstoffreste bedeutet,
$R^6$ gleich oder verschieden sein kann und gegebenenfalls substituierte aliphatische Kohlenwasserstoffreste mit mindestens 10 Kohlenstoffatomen oder gegebenenfalls substituierte aromatische Kohlenwasserstoffreste mit mindestens 6 Kohlenstoffatomen bedeutet,
$R^7$ gegebenenfalls substituierte aliphatische Kohlenwasserstoffreste mit mindestens 10 Kohlenstoffatomen oder gegebenenfalls substituierte aromatische Kohlenwasserstoffreste mit mindestens 6 Kohlenstoffatomen bedeutet,
$R^8$ gegebenenfalls substituierte Kohlenwasserstoffreste bedeutet,
$R^9$ gleich oder verschieden sein kann und gegebenenfalls substituierte Kohlenwasserstoffreste bedeutet,
e 2 oder 3 ist und
$X^-$ ein einwertiges organisches oder anorganisches Anion ist,

(D) Wasser
und gegebenenfalls
(E) weitere Komponenten.

Beispiele für den Rest R sind 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest.

Beispiele für substituierte Reste R sind Aminoethylaminopropyl-, Glycidoxypropyl- und Methacroylpropylrest.

Bei Rest R handelt es sich vorzugsweise um Kohlenwasserstoffreste mit mindestens 4 Kohlenstoffatomen, besonders bevorzugt um Kohlenwasserstoffreste mit 6 bis 18 Kohlenstoffatomen, insbesondere um Hexyl- und Octylreste, ganz besonders bevorzugt um den n-Hexylrest, n-Octylrest und iso-Octylrest, wie der 2,2,4-Trimethylpentylrest.

Beispiele für den Rest $R^1$ sind die unten für $R^3$ angegebenen Reste.

Bevorzugt handelt es sich bei Rest $R^1$ um gegebenenfalls substituierte Alkylreste mit 1 bis 4 Kohlenstoffatomen, besonders bevorzugt um den Methyl-, Ethyl-, n-Butyl-, 2-Methoxyethyl- oder Isopropylrest, insbesondere um den Ethylrest.

Bevorzugt handelt es sich bei Rest $R^2$ um Alkylreste mit 1 bis 3 Kohlenstoffatomen, wie Methyl-, Ethyl-, n-Propyl- und Isopropylreste, besonders bevorzugt um den Methylrest.

Der Wert für a ist vorzugsweise 1.

Der Wert für b ist vorzugsweise 0 oder 1.

Beispiele für Silane (A1) sind Isobutyltriethoxysilan, Hexyltriethoxysilan, Hexylmethyldiethoxysilan, n-Octyltrimethoxysilan, n-Octyltriethoxysilan, n-Octyltributoxysilan, Isooctyltriethoxysilan, n-Decyltriethoxysilan, Dodecylmethyldimethoxysilan, Hexadecyltrimethoxysilan, Octadecylmethyldimethoxysilan, Octadecylmethyldiethoxysilan und Octadecyltriethoxysilan sowie Aminoethylaminopropyltriethoxysilan, Glycidoxypropyltrimethoxysilan und Methacroylpropyltriethoxysilan.

Bevorzugt handelt es sich bei Silan (A1) um n-Hexyltriethoxysilan, n-Octyltriethoxysilan und Isooctyltriethoxysilan, wobei n-Octyltriethoxysilan und Isooctyltriethoxysilan besonders bevorzugt sind.

Falls es sich bei (A1) um Teilhydrolysate handelt, sind solche mit 2 bis 10 Si-Atomen bevorzugt. Teilhydrolysate entstehen dadurch, dass ein Teil der Reste $OR^1$ in den Silanen der Formel (I) durch Reaktion mit Wasser oder Wasserdampf abgespalten wurde und an Silzium gebundene OH-Gruppen entstehen. Diese können wiederum unter Abspaltung von Wasser zu Siloxanbindungen kondensieren, wodurch Oligomere entstehen, die neben Gruppen OR auch OH-Gruppen enthalten können. Teilhydrolysate von Silanen der Formel (I) können auch als Verunreinigung im Silan der Formel (I) enthalten sein.

Beispiele für Reste $R^3$ sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylrest, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-n pentyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest.

Beispiele für substituierte Reste $R^3$ sind der Trifluorpropylrest, der Aminopropylrest, der Aminoethylaminopropylrest, der Glycidoxypropylrest und der Mercaptopropylrest.

Bevorzugt handelt es sich bei Rest $R^3$ um gegebenenfalls mit sauerstoff- oder stickstoffhaltigen funktionellen Gruppen substituierte Kohlenwasserstoffreste mit 1 bis 18 Kohlenstoffatomen, besonders bevorzugt um Alkylreste mit 1 bis 18 Kohlenstoffatomen oder um aromatische Kohlenwasserstoffreste mit 6 bis 9 Kohlenstoffatomen, ganz besonders bevorzugt um Methyl-, n-Hexyl-, n-Heptyl-, n-Octyl-, iso-Octyl- n-Dodecyl-, Phenyl-und Ethylphenylreste, insbesondere um den Methylrest.

Beispiele für den Rest $R^4$ sind die für $R^3$ angegebenen Reste.

Bevorzugt handelt es sich bei Rest $R^4$ um Wasserstoffatom oder gegebenenfalls substituierte Alkylreste mit 1 bis 4 Kohlenstoffatomen, besonders bevorzugt um Wasserstoffatom, den Methyl-, Ethyl-, n-Butyl-, i-Propyl- und 2-Methoxyethylreste, insbesondere um Wasserstoffatom, Methyl- oder Ethylreste.

In Formel (II) ist c vorzugsweise 1, 2 oder 3.

Der Wert für d ist vorzugsweise 0 oder 1.

Bei den erfindungsgemäß eingesetzten Siloxanen (A2) kann es sich um beliebige, bisher bekannte Siliconöle, Siliconharze und oligomere Siloxane handeln, welche Einheiten der Formel (II) enthalten.

Die erfindungsgemäß eingesetzten Siloxane (A2) enthalten bevorzugt außer den Einheiten der Formel (II) keine weiteren Einheiten.

Beispiele für (A2) sind Organopolysiloxane wie Alkoxygruppen enthaltende Organopolysiloxane, die durch Umsetzung von Methyltrichlorsilan und ggf. anderen Alkyltrichlorsilanen oder Phenyltrichlorsilan mit Ethanol in Wasser herstellbar sind und Summenformeln wie $CH_3Si(OCH_2CH_3)_{0,8}O_{1,1}$ oder $C_6H_5Si(OCH_2CH_3)_{0,7}O_{1,2}$ entsprechen, diese oligomeren Siloxane haben bei 25°C eine Viskosität kleiner 500 mPas, vorzugsweise kleiner als 100 mPas insbesondere kleiner als 50 mPas;

oligomere Siloxane, die durch Hydrolyse/Kondensation aus Methyltriethoxysilan und Isooctyltriethoxysilan erhältlich sind und z.B. der Formel $([MeSiO_{3/2}]_{0,3-0,5}[IOSiO_{3/2}]_{0,02-0,6}[EtO_{1/2}]_{0,3-0,6})_x$ entsprechen (Me steht für Methyl, IO für Isooctyl und Et für Ethyl) und eine gewichtsmittlere Molmasse von 1000-10000 g/mol haben;

Siliconharze, bei denen in mindestens 70% der Einheiten der Formel (II) c=1 ist und in den anderen Einheiten der Formel (II) c=2 ist, vorzugsweise Siliconharze, bei denen in mindestens 80% der Einheiten der Formel (II), insbesondere 90% der Einheiten der Formel (II), c=1 ist, diese Harze haben bei 25°C eine Viskosität von mehr als 1000 mPas, vorzugsweise mehr als 5000 mPas, insbesondere mehr als 10000 mPas, einen Gehalt an Alkoxygruppen von 1 bis 6 Gew.-% und an Hydroxygruppen von 0,2 bis 1 Gew.-%; sowie

Polydimethylsiloxane mit einer Viskosität bei 25°C von 30 bis 1000000 mPas, die Hydroxylgruppen und/oder Aminoalkylgruppen enthalten können.

Bevorzugt handelt es sich bei den Siloxanen (A2) um Siliconharze, wobei Mischungen aus hochviskosen Siliconharzen mit niedrigviskosen Oligomeren oder Siliconölen besonders bevorzugt sind. Diese Mischungen haben bei 25°C eine Viskosität von vorzugsweise 100 bis 100000 mPas, insbesondere 1000 bis 10000 mPas.

Bevorzugt handelt es sich bei Komponente (A) um (A1) oder Gemische aus (A1) und (A2), besonders bevorzugt um (A1).

Falls es sich bei Komponente (A) um ein Gemisch aus (A1) und (A2) handelt, beträgt der Anteil an (A1) im Gemisch bevorzugt 20 bis 96 Gew.-%, insbesondere 50 bis 80 Gew.-%, jeweils bezogen auf die Summe aus (A1) und (A2).

Die erfindungsgemäßen Dispersionen enthalten Komponente (A) in Mengen von bevorzugt 5 bis 70 Gew.-%, besonders bevorzugt 30 bis 65 Gew.-%, jeweils bezogen auf die Gesamtformulierung.

Beispiele für die erfindungsgemäß eingesetzten nichtionogenen Emulgatoren (B) sind Sorbitanfettsäureester, ethoxylierte Sorbitanfettsäureester, ethoxylierte Fettsäuren, ethoxylierte lineare oder verzweigte Alkohole mit 10 bis 20 Kohlenstoffatomen, ethoxylierte Alkylphenole, Pentaerythritfettsäurester, Glycerinester und Alkylpolyglycoside.

Bevorzugt handelt es sich bei den nichtionogenen Emulgatoren (B) um Sorbitanfettsäureester, ethoxylierte Sorbitanfettsäureester, ethoxylierte Fettsäuren, ethoxylierte lineare oder verzweigte Alkohole mit 10 bis 20 Kohlenstoffatomen und ethoxylierte Triglyceride.

Vorzugsweise enthalten die erfindungsgemäßen Dispersionen keine ethoxylierten Alkylphenole, da diese bekannterweise nicht umweltverträglich sind.

Bei der erfindungsgemäß eingesetzten Komponente (B) kann es sich nur um einen nichtionogenen Emulgator mit einem HLB-Wert von größer oder gleich 12, insbesondere größer oder gleich 14, handeln oder um ein Gemisch von mehreren nichtionogenen Emulgatoren, mit der Maßgabe, dass mindestens ein Emulgator einen HLB-Wert von größer oder gleich 12, insbesondere größer oder gleich 14, hat.

Vorzugsweise werden als Komponente (B) Mischungen von nichtionogenen Emulgatoren eingesetzt, von denen mindestens ein Emulgator einen HLB-Wert größer oder gleich 12 hat. Dabei beträgt der Anteil an Emulgatoren mit einem HLB-Wert größer oder gleich 12 im Emulgatorgemisch (B) bevorzugt mindestens 30 Gew.-%.

Der HLB-Wert ist Ausdruck des Gleichgewichts zwischen hydrophilen und hydrophoben Gruppen eines Emulgators. Die Defintion des HLB-Werts sowie Verfahren zu deren Ermittlung sind allgemein bekannt und z.B. in Journal of Colloid and Interface Science 298 (2006) 441-450 sowie der dort zitierten Literatur beschrieben.

Beispiele für die erfindungsgemäß eingesetzten nichtionogenen Emulgatoren (B) mit einem HLB-Wert von größer oder gleich 12 sind (HLB-Werte laut Hersteller, POE steht für Polyoxyethylen):

| Chemische Bezeichnung | HLB-Wert | Hersteller (Bsp.) | Handelsname |
|---|---|---|---|
| POE(20)Sorbitanmonostearat | 14,9 | Croda1) | Tween 60 |
| POE(20)Sorbitanmonooleate | 15,0 | Croda1) | Tween 80 |
| POE(20)Sorbitanmonolaurat | 16,7 | Croda1) | Tween 20 |
| POE(200)Rizinusöl | 18,1 | Croda1) | Atlas G1300 |
| POE (40) stearat | 16,9 | Croda1) | Myrj 52 |
| POE (23) laurylether | 16,9 | Croda1) | Brij 35 |
| POE(10)isotridecylether | 13,7 | Sasol2) | Marlipal O13/100 |
| POE(12)isotridecylether | 14,5 | Sasol2) | Marlipal O13/120 |
| POE(16)isotridecylether | 15,6 | Cognis3 | Arlypon IT 16 |
| 1)Croda International Plc, Cowick Hall, Snaith Goole East Yorkshire UK<br>2)Sasol Germany GmbH, Marl<br>3)Cognis GmbH, Illertissen. | | | |

Beispiele für zusätzlich einsetzbare nichtionogene Emulgatoren mit einem HLB-Wert < 12 sind (HLB-Werte laut Hersteller bzw. Tabelle 3 in oben genannter Quelle), POE steht für Polyoxyethylen):

| Chemische Bezeichnung | HLB-Wert | Hersteller (Bsp.) | Handelsname |
|---|---|---|---|
| Sorbitanmonostearat | 4,7 | Croda1) | Span 60 |
| Sorbitanmonooleate | 4,3 | Croda1) | Span 80 |
| Sorbitanmonolaurat | 8,6 | Croda1) | Span 20 |
| POE (4) laurylether | 9,7 | Croda1) | Brij 30 |
| POE(6)isotridecylether | 11,4 | Sasol2) | Marlipal O13/60 |
| POE(5)isotridecylether | 10,5 | Cognis3) | Arlypon IT 5 |
| POE(4)stearylether | 7,5 | Cognis3) | Arlypon SA 4 |
| 1)Croda International Plc, Cowick Hall, Snaith Goole East Yorkshire UK<br>2)Sasol Germany GmbH, Marl<br>3)Cognis GmbH, Illertissen. | | | |

Die erfindungsgemäßen Dispersionen enthalten Komponente (B) in Mengen von bevorzugt 1,0 bis 10 Gew.-%, besonders bevorzugt 1,5 bis 3 Gew.-%, jeweils bezogen auf die Gesamtformulierung.

Beispiele für Reste $R^5$ und $R^9$ sind jeweils unabhängig voneinander die für Rest $R^3$ angegebenen Beispiele.

Bevorzugt handelt es sich bei Rest $R^5$ um Alkylreste mit 1 bis 4 Kohlenstoffatomen, besonders bevorzugt um den Methylrest.

Beispiele für Kohlenwasserstoffreste $R^6$ und $R^7$ sind jeweils unabhängig voneinander Decylreste, wie der n-Decylrest; Dodecylreste, wie der n-Dodecylrest; Hexadecylreste, Heptadecylreste, Octadecylreste, wie der n-Octadecylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest.

Beispiele für substituierte Kohlenwasserstoffreste $R^6$ und $R^7$ sind jeweils unabhängig voneinander Laurylsäureamidoethylreste, Palmitinsäureamidoethylreste und Stearinsäureamidoethylreste.

Bevorzugt handelt es sich bei Rest $R^6$ um lineare Alkylreste mit 12 bis 22 Kohlenstoffatomen oder aromatische Reste, besonders bevorzugt um aromatische Kohlenwasserstoffreste, insbesondere um den Benzylrest.

Bevorzugt handelt es sich bei Rest $R^7$ um lineare Alkylreste mit 12 bis 22 Kohlenstoffatomen, insbesondere um den Lauryl-, Palmityl-, Oleyl- oder Stearylrest.

Beispiele für Rest $R^8$ sind die für Reste $R^5$, $R^6$ und $R^7$ angegebenen Beispiele.

Bevorzugt handelt es sich bei Rest $R^8$ um gegebenenfalls substituierte Alkylreste mit 1 bis 22 Kohlenstoffatomen, besonders bevorzugt um den Methyl-, Lauryl-, Palmityl-, Oleyl-, Stearyl-, Laurylsäureamidoethyl-, Palmitinsäureamidoethyl- und Stearinsäureamidoethylrest.

Bevorzugt handelt es sich bei Rest $R^9$ um Alkylreste mit 1 bis 4 Kohlenst ffatomen, besonders bevorzugt um den Methylrest.

Beispiele für Anion $X^-$ sind Halogenidionen, wie das Chlorid-, Bromid- und Jodidion, Hydrogensulfationen, Alkylsulfationen, wie Methylsulfation, und Dialkylphosphationen.

Bevorzur handelt es sich bei Anion $X^-$ um ein Chlorid-, Bromid-, Jodid- oder Methylsulfatanion, besonders bevorzugt um ein Chlorid- oder Methylsulfatanion.

Beispiele für die erfindungsgemäß eingesetzte Komponente (C1) sind alle bekannten quartären Ammoniumverbindungen, die mindestens einen substituierten oder unsubstituierten Kohlenwasserstoffrest mit mindestens 10 Kohlenstoffatomen tragen, wie Dodecyldimethylammoniumchlorid, Tetradecyltrimethylammoniumbromid, Stearyltrimethylammoniumchlorid, Distearyldimethylammoniumchlorid, Cetyltrimethylammoniumchlorid, Behenyltrimethylammoniumbromid, Dodecylbenzyldimethylammoniumchlorid und Benzyltrimethylammoniumchlorid.

Bevorzugt handelt es sich bei Komponente (C1) um Aryl- oder Alkyltrimethylammoniumsalze wie Stearyltrimethylammoniumchlorid und Cetyltrimethylammoniumchlorid, besonders bevorzugt um Benzyltrialkylammoniumsalze, insbesondere um Trimethylbenzylammiumchlorid und Trimethylbenzylammoniummethosulfat.

Beispiele für die erfindungsgemäß eingesetzte Komponente (C2) sind alle bekannten quartären Imidazoliniumverbindungen, die mindestens einen substituierten oder unsubstituierten Kohlenwasserstoffrest mit mindestens 10 Kohlenstoffatomen tragen, wie 1-Methyl-2-stearyl-3-stearylamidoethyl-imidazolinium methosulfat, 1-Methyl-2-norstearyl-3-stearyl-amidoethylimidazolinium-methosulfat, 1-Methyl-2-oleyl-3-oleylamidoethylimidazolinium-methosulfat, 1-Methyl-2-stearyl-3-methylimidazolinium-metho-sulfat, 1-Methyl-2-behenyl-3-methylimidazolinium-methosulfat und 1-Methyl-2-dodecyl-3-methylimidazolinium-methosulfat.

Bevorzugt handelt es sich bei Komponente (C2) um 1-Methyl-2-stearyl-3-stearylamidoethyl-imidazoliniummethosulfat, 1-Methyl-2-norstearyl-3-stearyl-amidoethylimidazolinium-methosulfat und 1-Methyl-2-oleyl-3-oleylamidoethylimidazolinum-methosulfat.

Bei der erfindungsgemäß eingesetzten Komponente (C) handelt es sich bevorzugt um Benzyltrimethylammoniumverbindungen oder quartäre Imidazoliniumverbindungen, wobei quartäre Imidazoliniumverbindungen besonders bevorzugt sind.

Die erfindungsgemäßen Dispersionen enthalten Komponente (C) in Mengen von bevorzugt 0,1 bis 5 Gew.-%, besonders bevorzugt 0,3 bis 1,5 Gew.-%, jeweils bezogen auf die Gesamtmenge der Dispersion.

Bei den erfindungsgemäßen Dispersionen beträgt das Gewichtsverhältnis von Komponente (B) zur Komponente (C) vorzugsweise 0,5 bis 10, insbesondere 2 bis 5.

Bei dem erfindungsgemäß eingesetzten Wasser (D) kann es sich um beliebige Arten von Wasser, wie etwa natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer handeln.

Bevorzugt handelt es sich bei dem erfindungsgemäß eingesetzten Wasser (D) um Wasser mit einer Leitfähigkeit von weniger als 10 $\mu$S/cm, insbesondere um weniger als 2 $\mu$S/cm.

Die erfindungsgemäßen Dispersionen enthalten Komponente (D) in Mengen von bevorzugt 20 bis 95 Gew.-%, besonders bevorzugt 40 bis 60 Gew.-%, jeweils bezogen auf die Gesamtmenge an Dispersion.

Bei den erfindungsgemäß gegebenenfalls eingesetzten weiteren Komponenten (E) kann es sich um alle Zusatzstoffe handeln, die auch bisher in wässrigen Dispersionen eingesetzt worden sind, wie z.B. Verdicker, Organosiliciumverbindungen, die unterschiedlich sind zu (A1) und (A2), Katalysatoren, Substanzen zum Einstellen des pH-Wertes, Puffersubstanzen, Füllstoffe, Duftstoffe, Farbstoffe, Frostschutzmittel, wie Glycole und Glycolether, sowie Konservierungsmittel.

Beispiele für gegebenenfalls eingesetzte Verdicker (E) sind Polyacrylsäure, Polyacrylate, Celluloseether wie Carboxymethylcellulose und Hydroxyethylcellulose, natürliche Gume wie Xanthan Gum und Polyurethane.

Beispiele für gegebenenfalls eingesetzte Organosilciumverbindungen (E) sind Silane, die keine Kohlenwasserstoffgruppen mit mindestens 4 Kohlenstoffatomen enthalten, wie etwa Tetraethoxysilan, Trimethylmethoxysilan, Aminopropyltriethoxysilan und A-minopropylmethyldimethoxysilan.

Beispiele für Substanzen zum Einstellen des pH-Wertes sind neben Aminosilanen auch Amine, wie z.B. Monoethanolamin oder Alkalihydroxide. Wenn es erforderlich ist, um die Konstanz des pH-Wertes über eine längeren Zeitraum zu gewährleisten, können auch Puffersysteme, wie Salze der Essigsäure, Salze der Phosphorsäure, Salze der Zitronensäure jeweils in Kombination mit der freien Säure je nach gewünschtem pH-Wert verwendet werden.

Als Füllstoffe (E) können die erfindungsgemäßen Dispersionen Siliciumdioxid (Kieselsäuren), Titandioxid oder Aluminiumoxid mit einer BET-Oberfläche von bevorzugt 20 bis 1000 $m^2/g$, einer Partikelgröße von bevorzugt weniger als 10 $\mu m$ und einer Agglomeratgröße von bevorzugt weniger als 100 $\mu m$ enthalten.

Besonders bevorzugt handelt es sich bei den gegebenenfalls eingesetzten Füllstoffen (E) um Kieselsäuren, insbesondere solche mit einer BET-Oberfläche von 50 bis 800 $m^2/g$. Diese Kieselsäuren können pyrogene oder gefällte Kieselsäuren sein. Insbesondere sind als Füllstoffe (E) vorbehandelte Kieselsäuren einsetzbar, wie etwa handelsübliche vollständig oder teilweise hydrophobierte Kieselsäuren. Beispiele für handelsübliche hydrophobe Kieselsäuren, die erfindungsgemäß eingesetzt werden können, sind eine pyrogene, behandelte Kieselsäure mit einer BET-Oberfläche von 120 $m^2/g$ und einem Kohlenstoffgehalt von 0,8 Gew.-% (erhältlich unter der Bezeichnung HDK® H15 bei der Wacker Chemie AG, Deutschland), eine pyrogene behandelte Kieselsäure mit einer BET-Oberfläche von 140 $m^2/g$ und einem Kohlenstoffgehalt von 2,8 Gew.-% (erhältlich unter der Bezeichnung HDK® H2000 bei der Wacker Chemie AG, Deutschland) und eine gefällte mit Polydimethylsiloxan behandelte Kieselsäure mit einer BET-Oberfläche von 90 $m^2/g$ (erhältlich unter der Bezeichnung "Sipernat D10" bei der Degussa AG, Deutschland).

Die erfindungsgemäßen Dispersionen sind vorzugsweise frei von mit Wasser nicht mischbaren Lösungsmitteln oder enthalten mit Wasser nicht mischbare Lösungsmittel in Mengen von maximal 1 Gew.%, bezogen auf die Gesamtmenge an Dispersion.

Unter "mit Wasser nicht mischbaren Lösungsmitteln" im Sinne der vorliegenden Erfindung sind alle Lösungsmittel zu verstehen, die bei 20°C und einem Druck von 101,325 kPa mit Wasser in Mengen von maximal 1g/l löslich sind.

Insbesondere haben diese mit Wasser nicht mischbaren Lösungsmittel bei 20°C einen Dampfdruck von 0,1 kPa oder höher.

Beispiele für solche mit Wasser nicht mischbaren Lösungsmittel sind Benzol, Toluol, Xylol, Hexan, Cyclohexan und paraffinische Kohlenwasserstoffgemische.

Bevorzugt handelt es sich bei den erfindungsgemäßen Dispersionen um solche enthaltend

(A) Organosiliciumverbindung (A1) gegebenenfalls im Gemisch mit (A2),
(B) Mischungen von nichtionogenen Emulgatoren, von denen mindestens ein Emulgator einen HLB-Wert größer oder gleich 12 hat,
(C) kationisches Tensid der Formeln (III) und/oder (IV),
(D) Wasser und
gegebenenfalls
(E) weitere Komponenten.
Besonders bevorzugt handelt es sich bei den erfindungsgemäßen Dispersionen um solche enthaltend
(A) 10 bis 60 Gew.-% (A1) und 0 bis 20 Gew.-% (A2),
(B) 1,0 bis 10 Gew.-% Mischungen von nichtionogenen Emulgatoren, von denen mindestens ein Emulgator einen HLB-Wert größer oder gleich 12 hat,
(C) 0,1 bis 5 Gew.-% kationisches Tensid der Formeln (III) und/oder (IV),
(D) Wasser und
gegebenenfalls
(E) weitere Komponenten.

Insbesondere enthalten die erfindungsgemäßen Dispersionen keine weiteren über die Komponenten (A), (B), (C), (D) und (E) hinausgehende Komponenten.

Die Herstellung der erfindungsgemäßen wässrigen Dispersionen erfolgt nach an sich bekannten Verfahren. Üblicherweise erfolgt die Herstellung durch einfaches Verrühren aller Bestandteile bei Temperaturen von vorzugsweise 1 bis 50°C und gegebenenfalls anschließendes Homogenisieren, z.B. mit Strahldispergatoren, Rotor-Stator-Homogenisatoren bei Umfangsgeschwindigkeiten von vorzugsweise 5 bis 40 m/s, Kolloidmühlen oder Hochdruckhomogenisatoren bei Homogenisierdrücken von bevorzugt 50 bis 2000 bar.

Ein weiterer Gegenstand der Erfindung ist ein Verfahren zur Herstellung der erfindungsgemäßen Dispersionen durch Vermischen der Komponenten (A), (B), (C), (D) und gegebenenfalls (E).

In einer bevorzugten Ausführungsform des erfindungsgemäßen Verfahrens werden die Komponente (B), ein Teil der Komponente (D) und ggf. Komponente (C) vorgelegt, dann wird mit einem Rotor-Stator-Homogenisator die Komponente (A) eingearbeitet, die restliche Menge an Komponente (D), gegebenenfalls Komponente (E) und, wenn nicht bereits zu Beginn mit vorgelegt, Komponente (C) einhomogenisiert. Vorzugsweise schließt sich daran eine Homogenisierung mit einem Hochdruckhomogenisator bei 50 bis 2000 bar, insbesondere bei 100 bis 500 bar, an.

Homogenisiertechniken einschließlich Hochdruckhomogenisatoren sind allgemein bekannt. Hierzu sei z.B. auf Chemie Ingenieur Technik, 74(7), 901-909 2002 verwiesen.

Bei dem erfindungsgemäßen Verfahren können - falls erwünscht - die Komponenten (A1) und/oder (A2) sowie gegebenenfalls (E) in Form von Dispersionen oder Lösungen eingesetzt und mit den restlichen Komponenten vermischt werden.

Die erfindungsgemäßen Dispersionen sind vorzugsweise milchige, weiße bis beige Flüssigkeiten.

Die erfindungsgemäßen Dispersionen haben einen pH-Wert von vorzugsweise 5 bis 9, insbesondere von 6 bis 8.

Die erfindungsgemäßen Dispersionen haben einen Anteil an nicht flüchtigen Verbindungen (z.B. bestimmt nach ASTM D 5095) von vorzugsweise 10 bis 80 Gew.-%, besonders bevorzugt von 20 bis 70 Gew.-%.

Die erfindungsgemäßen Dispersionen haben eine volumenmittlere Teilchengröße von bevorzugt 0,1 bis 10 $\mu$m, insbesondere von 0,3 bis 1,5 $\mu$m.

Die Dispersität der erfindungsgemäßen Dispersionen ist im Bereich von bevorzugt 0,5 bis 5, besonders bevorzugt 1,5 bis 3. Dieser Wert wird berechnet aus $(D_{90}-D_{10})/D_{50}$, wobei $D_x$ für die Teilchengröße steht, bei der x% des Volumens der inneren Phase sich in Teilchen kleiner oder gleich dieser Teilchengröße befinden.

Die erfindungsgemäßen Dispersionen haben eine Viskosität von weniger als 10000 mPas, insbesondere weniger als 1000 mPas, jeweils gemessen bei 25°C.

Die erfin lungsgemäßen Dispersionen haben den Vorteil, dass sie eine seln hohe Lagerstabilität haben.

Die erfindungsgemäßen Dispersionen haben den Vorteil, dass sie kostengünstig herstellbar sind.

Die erfindungsgemäßen Dispersionen haben den Vorteil, dass sie einfach. In der Handhabung sind.

Die erfindungsgemäßen Dispersionen haben den Vorteil, dass sie leicht verdünnbar sind und auch in verdünnter Form eine sehr hohe Lagerstabilität haben.

Das Verfahren zur Herstellung der erfindungsgemäßen Dispersionen hat den Vorteil, dass es einfach in der Durchführung ist.

Die erfindungsgemäßen Dispersionen haben den Vorteil, dass sie eine sehr gute und beständige Imprägnierwirkung und ein sehr gutes Eindringverhalten auf unterschiedlichen Untergründen ausprägen.

Die erfindungsgemäßen wässrigen Dispersionen können für alle Zwecke eingesetzt werden, für die auch bisher Dispersionen auf der Basis von Organosiliciumverbindungen eingesetzt worden sind. Sie sind z.B. hervorragend als Bautenschutzmittel geeignet, insbesondere zum Hydrophobieren verschiedener mineralischer oder organischer Untergründe. Die Art und Weise der Anwendung derartiger Dispersionen ist dem Fachmann bekannt.

Ein weiterer Gegenstand der vorliegenden Erfindung ist ein Verfahren zur Behandlung von Substraten, **dadurch gekennzeichnet, dass** die Substrate mit den erfindungsgemäßen Dispersionen in Kontakt gebracht werden.

Beispiele für Substrate, die mit den erfindungsgemäßen Dispersionen behandelt werden können, sind mineralische Stoffe, wie Mauerwerk, Mörtel, Ziegel, Kalkstein, Marmor, Kalksandstein, Sandstein, Granit, Porphyr, Beton und Porenbeton, organische Stoffe, wie Holz, Papier, Pappe, Textilien, Kunst- und Naturfasern.

Im Allgemeinen dringen die Dispersionen bei dem erfindungsgemäßen Verfahren in die Kapillaren des Substrates ein und trocknen dort.

Bevorzugt werden bei dem erfindungsgemäßen Verfahren mineralische Substrate und Holzwerkstoffe eingesetzt.

Bei der erfindungsgemäßen Behandlung handelt es sich bevorzugt um Imprägnierung, Beschichtung, Grundierung und Injektage, besonders bevorzugt um Imprägnierung, wobei insbesondere das Substrat mit der Dispersion in Kontakt gebracht wird und die Dispersion partiell oder vollständig in das Substrat eindringt.

Bei der erfindungsgemäßen Imprägnierung handelt es sich bevorzugt um die hydrophobierende Imprägnierung und kann sowohl als Imprägnierung der Oberfläche als auch als Injektage oder als Massehydrophobierung erfolgen.

Durch die erfindungsgemäße Hydrophobierung wird die Wasseraufnahme des Substrats drastisch reduziert, was die Wärmeleitfähigkeit absenkt, aber auch die Zerstörung der Baustoffe durch den Einfluss von Frost- und Tau-Zyklen oder Salz oder aber bei Holzwerkstoffen durch Fäulnis oder Pilzbefall verhindert. Damit wird nicht nur die Werthaltigkeit des so behandelten Werkstoffs gesichert sondern z.B. auch ein niedriger Energieverbrauch beim Heizen oder Klimatisieren.

Für die erfindungsgemäßen Imprägnieranwendungen werden die erfindungsgemäßen Dispersionen durch gängige und bisher bekannte Methoden der Verteilung auf die Oberfläche des Substrates gegeben, wie z.B. durch Streichen,

Spritzen, Rakeln, Rollen, Gießen, Spachteln, Tauchen und Walzen. Für die Mauerwerksbehandlung ist es erforderlich, dass die Zubereitungen weit in das Mauerwerk eindringen. Daher sind für die Mauerwerksbehandlung niedrigviskose Dispersionen bevorzugt. Die Eigenschaft in das Mauerwerk einzudringen kann eine Materialeigenschaft sein oder das Eindringen wird künstlich gefördert, indem die Dispersionen mit erhöhtem Druck in das Mauerwerk befördert werden.

Die erfindungsgemäßen Dispersionen können auch zur Formulierung von Anstrichstoffen in Kombinationen mit organischen Dispersionen und Pigmenten verwendet werden um diesen Anstrichstoffen hydrophobe Eigenschaften zu geben. Diese Anwendung kann auch in Kombination mit fluororganischen Polymerdispersionen erfolgen, z.B. wenn neben einer Wasser abweisenden Wirkung auch ein Öl und Schmutz abweisende Wirkung gewünscht ist, z.B. um eine Beschädigung des Bauwerkes durch Graffiti zu verhindern.

Bei dem erfindungsgemäßen Verfahren kann je nach Substrat und der beabsichtigten Wirkung die Anwendung der erfindungsgemäßen Dispersion konzentriert oder aber mit Wasser verdünnt erfolgen. Wenn die erfindungsgemäße Anwendung in verdünnter Form erfolgen soll, dann beträgt der Gehalt an Komponente (A) in der angewendeten Dispersion bevorzugt 2 bis 35 Gew.-%, insbesondere 5 bis 20 Gew.-%.

Das Verfahren zur Behandlung von Substraten hat den Vorteil, dass es effizient und kostengünstig ist und dass die Substrate langfristig vor dem Einfluss von Wasser geschützt sind.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

**Beispiel 1**

45 Teile Isooctyltriethoxysilan (erhältlich unter dem Namen SILRES® BS 1701 bei der Wacker Chemie AG, D-München) werden mit 1 Teil ethoxyliertem Sorbitanlaurat (HLB = 16,7) und 1 Teil Sorbitanlaurat (HLB = 8,6) mit einem Ultra-Turrax® (IKA®-Werke GmbH & Co.KG, D-Staufen) vermischt. Anschließend werden 52,3 Teile vollentsalztes Wasser (Leitfähigkeit <5μS/cm) langsam zugegeben; es wird eine milchige Öl-in-Wasser-Emulsion erhalten. Zu dieser Emulsion werden noch 0,5 Teile Hexadecyltrimethylammoniumchlorid (erhältlich unter der Bezeichnung Genamin® CTAC 50 bei der Clariant GmbH, D-Frankfurt) und 0,2 Teile Konservierungsmittel Acticide® BX(N) (erhältlich bei der Thor Chemie GmbH, D-Speyer) zugegeben. Die so erhaltene Emulsion wird mit einem Hochdruckhomogenisator (APV 2000, Invensys APV Unna) bei 500 bar homogenisiert. Es wird eine dünnflüssige Emulsion erhalten, die eine volumenmittlere Teilchengröße von 1,11 μm aufweist.

Zur Prüfung der Qualität und Stabilität wurden folgende Prüfungen der Emulsion durchgeführt:

Teilchengrößenmessung (D[4,3] = volumenmittlere Teilchengröße) mit einem Malvern Mastersizer (Malvern Instruments GmbH D- Herrenberg; Messprinzip: Frauenhofer Beugung).

Stabilität beim Zentrifugieren (1h bei 4000 Umdrehungen pro min, was einer Belastung mit der 2500-fachen Erdanziehung entspricht), visuelle Beurteilung von Wasser oder Ölabscheidungen bzw. dem Aufrahmen der Emulsion. Stabilität bei der Wärmelagerung in einem geschlossenen Gefäß für 14 d bei 50°C, visuelle Beurteilung von Wasser oder Ölabscheidungen bzw. dem Aufrahmen der Emulsion und Bestimmung des molaren Anteils an Alkyltrialkoxysilan, bezogen auf die Summe des Siliziums in Silanen und Siloxanen im Vergleich zum Anteil vor der Wärmelagerung durch quantitative $^{29}$Si-NMR-Analyse.

Die Ergebnisse finden sich in Tabelle 1.

**Beispiel 2**

Die in Beispiel 1 beschriebene Verfahrensweise wird wiederholt mit der Abänderung, dass als Emulgatoren 0,75 Teile eines ethoxylierten Isotridecylalkohols mit 5 Ethylenglycolgruppen (HLB = 11,2), 0,75 Teile eines ethoxyliertes Rizinusöls mit 200 Ethylenglycolgruppen (HLB = 18,1) und 0,5 Teile 1-Methyl-2-norstearyl-3-stearinsäure-amidoethylimidazolinium-methosulfat/Propylenglycol 3:1 (erhältlich unter der Bezeichnung Rewoquat® W 75 PG bei der Tego Service GmbH, D-Essen) verwendet werden.

Die Ergebnisse finden sich in Tabelle 1.

**Vergleichbeispiel 1**

Die in Beispiel 1 beschriebene Verfahrensweise wird wiederholt mit der Abänderung, dass kein Hexadecyltrimethylammoniumchlorid verwendet wird.

Die Ergebnisse finden sich in Tabelle 1.

**Vergleichsbeispiel 2**

Die in Beispiel 1 beschriebene Verfahrensweise wird wiederholt mit der Abänderung, dass als Emulgator anstelle der nichtionogenen Emulgatoren ausschließlich 2 Teile Hexadecyltrimethylammoniumchlorid verwendet werden.

Die Ergebnisse finden sich in Tabelle 1.

**Vergleichsbeispiel 3**

Die in Beispiel 1 beschriebene Verfahrensweise wird wiederholt mit der Abänderung, dass als Emulgator anstelle der nichtionogenen Emulgatoren 2 Teile 1-Methyl-2-norstearyl-3-stearinsäureamidoethylimidazolinium-methosulfat/Propylenglycol 3:1 verwendet wird.

Die Ergebnisse finden sich in Tabelle 1.

**Vergleichsbeispiel 4**

Die in Beispiel 1 beschriebene Verfahrensweise wird wiederholt mit der Abänderung, dass als Emulgator 2 Teile Ölsäure und 0,5 Teile Monoethanolamin verwendet werden.

Die Ergebnisse finden sich in Tabelle 1.

**Vergleichsbeispiel 5**

Die in Beispiel 1 beschriebene Verfahrensweise wird wiederholt mit der Abänderung, dass als Emulgator 1 Teil Hexadecyltrimethylammoniumchlorid und 1 Teil Sorbitanlaurat (HLB = 8,6) verwendet werden.

Die Ergebnisse finden sich in Tabelle 1.

**Beispiel 3**

15 Teile des in Beispiel 1 verwendeten Isooctyltriethoxysilans und 10 Teile Octadecylmethyldimethoxysilan werden mit 5 Teilen eines oligomeren Alkoxysiloxans der Summenformel $CH_3Si(OCH_2CH_3)_{0,8}O_{1,1}$ und mit 7 Teilen eines Methylsiliconharzes mit eine Glasübergangstemperatur von 45°C, einer mittleren Molmasse von ca. 10000 g/mol und einem Gehalt an Ethoxygruppen von 2,8 Gew.-% (erhältlich unter dem Namen SILRES® BS1321 bei der Wacker Chemie AG, D-München), 0,25 Teilen Aminoethyltriethoxysilan und 2 Teilen einer hydrophobierten Kieselsäure (erhältlich unter dem Namen HDK® H 2000 bei der Wacker Chemie AG, D-München) vermischt. Die so erhaltene Mischung wird mit 1,2 Teilen eines ethoxylierten Isotridecylalkohols mit 16 Ethylenglycolgruppen (HLB = 15,5), 0,5 Teilen 1-Methyl-2-norstearyl-3stearinsäure-amidoethylimidazolinium-methosulfat und 55 Teilen Wasser mit einem Ultra-Turrax zu einer Emulsion verarbeitet. Dieser Emulsion werden noch 4 Teile einer 50%igen wässrigen Emulsion eines Aminogruppen enthaltenden Polydimethylsiloxans mit einer Viskosität von 500 mPas und einer Aminzahl von 0,15 meq/g (erhältlich unter der Bezeichnung SILRES® BS 1306 bei der Wacker Chemie AG, D-München) zugesetzt. Die Emulsion wird mit einem Hochdruckhomogenisator (APV 2000, Invensys APV Unna) bei 200 bar homogenisiert.

Die Ergebnisse finden sich in Tabelle 1.

**Beispiel 4**

25 Teile des in Beispiel 1 verwendeten Isooctyltriethoxysilans werden mit 5 Teilen eines oligomeren Alkoxysiloxans der Summenformel $CH\ Si(OCH_2CH_3)_{0,8}O_{1,1}$ und mit 7 Teilen eines Methylsiliconharzes, das aus 90 mol-% Einheiten der Formel (II), in denen c=1 ist, und 10 % Einheiten der Formel (II), in denen c=2 ist, besteht, mit einer gewichtsmittleren Molmasse von 6700 g/mol und einen Gehalt an Ethoxygruppen von 3,1 Gew.-% und an Hydroxygruppen von 0,57 Gew.-%, 0,25 Teilen Aminoethylaminopropyltriethoxysilan und 2 Teilen einer hydrophobierten Kieselsäure (erhältlich unter dem Namen HDK® H 2000 bei der Wacker Chemie AG, D-München) vermischt. Die so erhaltene Mischung wird mit 0,6 Teilen eines ethoxylierten Isotridecylalkohols mit 5 Ethy-lenglycolgruppen (HLB = 11,2), 0, 6 Teilen eines ethoxylierten Rizinusöls mit 200 Ethylenglycolgruppen (HLB = 18,1), 0,5 Teilen Benzyltrimetylammoniumchlorid und 55 Teilen Wasser mit einem Ultra-Turrax zu einer Emulsion verarbeitet. Dieser Emul-sion werden noch 4 Teile einer 50%igen wässrigen Emulsion eines Aminogruppen enthaltenden Polydimethylsiloxans mit einer Visko-siät von 500 mPas und einer Aminzahl von 0,15 meq/g (erhält-lich unter der Bezeichnung SILRES® BS 1306 bei der Nacker chemie AG, D-Munchen) zugesetzt. Die Emulsion wird mit einem Hochdruckhomogenisator (APV 2000, Invensys APV Unna) bei 200 bar homogenisiert.

Die Ergebnisse finden sich in Tabelle 1.

Tabelle 1:

| Beispiel | D[4,3]in μm | Abscheidungen beim Zentrifugieren | Abscheidungen nach Wärmelagerung | Alkyltrialkoxysilan nach Wärmelagerung |
|---|---|---|---|---|
| 1 | 1,11 | 12 % | 10 % | 100% |
| 2 | 0,71 | 23 % | 6% | 100% |
| 3 | 0,75 | 3% | 1% | 100% |
| 4 | 0, 87 | 4% | 2% | 100% |
| V1 | 0,79 | 16 % | getrennt | nicht bestimmt |
| V2 | 0,56 | 50 % | 18% | nicht bestimmt |
| V3 | keine Emulsionsbildung | | | |
| V4 | 0,40 | 6 % | i.O. | 10 % |
| V5 | 0,59 | 40 % | nicht bestimmt | nicht bestimmt |

**Beispiel 5**

Die erfindungsgemäßen Dispersionen wurden zur Imprägnierung von Mörtelscheiben verwendet. Zur Herstellung der Mörtelscheiben wurden 2700 g Normensand (erhältlich bei der Fa. Normensand GmbH, 59269 Beckum bei D-Münster), 900 g Weißzement PZ 450 Z (erhältlich bei der Fa. Dyckerhoff Zementwerke AG, D-65203 Wiesbaden) und 450 g Leitungswasser vermischt. Anschließend wird die Mischung in Kunststoffringe (Durchmesser 8,5 cm, Höhe 2 cm) gegossen, die sich auf einer Kunststofffolie befinden. Zur Verdichtung und Entfernung von Lufteinschlüssen wird mit einer Spachtel öfters in die Masse gestoßen und abschließend mit der Spachtel der Überstand der Betonmischung entfernt. Die Proben werden mit einer Folie abgedeckt und an den Kanten gesäubert. Bis zum Einsatz müssen die Prüfkörper mindestens 3 Monate im Normklima (23°C, 50 % rel. Luftfeuchtigkeit) gelagert werden. Unmittelbar vor der Verwendung wird die Oberseite der Proben zur Entfernung der Zementsinterschicht sandgestrahlt.

Die so erhaltenen Mörtelscheiben werden vor der Imprägnierung 2 Minuten in entionisiertes Wasser getaucht und 12 Stunden lang in Folie verpackt bei Raumtemperatur gelagert. Anschließend werden sie 2 Stunden unverpackt im Normklima (23/50) gelagert und nach Feststellung des Ausgangsgewichtes (W1) imprägniert. Dies geschieht so, dass die Prüfkörper für 1 Minute in die jeweilige erfindungsgemäße Dispersion getaucht werden (Flüssigkeitsüberstand ca. 5 cm). Dabei werden die Dispersionen gemäß den Beispielen 1 und 2 konzentriert eingesetzt, die Dispersionen gemäß den Beispielen 3 und 4 werden im Gewichtsverhältnis 1:4 mit Wasser verdünnt zum Imprägnieren verwendet. Jetzt wird erneut gewogen (W2) und aus der Differenz (W2 - W1) die Imprägniermittelaufnahme bestimmt.

Zur Ausbildung der hydrophoben Wirkung werden die Proben 14 Tage im Normklima (23/50) gelagert. Nun werden die Prüfkörper erneut gewogen (W5) und für 24 Stunden in entionisiertes Wasser gelegt (5 cm Wasserüberstand). Die Wasseraufnahme wird durch Wägungen (W6) bestimmt. Die prozentuale Wasseraufnahme berechnet sich nach (W6 - W5)/W5 x 100. Die Ergebnisse sowie ein Blindversuch ohne Dispersion (Mittelwerte von jeweils 3 Mörtelscheiben) sind in folgender Tabelle dargestellt:

Tabelle 2:

| Beispiel | Wasseraufnahme in % | Eindringtiefe in mm |
|---|---|---|
| 1 | 0,35 | 6 |
| 2 | 0,36 | 5 |
| 3 | 0,72 | 2 |
| 4 | 1,14 | 1 |

(fortgesetzt)

| Beispiel | Wasseraufnahme in % | Eindringtiefe in mm |
|---|---|---|
| unbehandelt | 6,84 | - |

## Patentansprüche

**1.** Wässrige Dispersionen enthaltend

(A) mindestens eine Organosiliciumverbindung ausgewählt aus

(A1) Silanen der Formel

$$R_aR^2_bSi(OR^1)_{4-a-b} \qquad (I),$$

worin
R gleich oder verschieden sein kann und einwertige, SiC-gebundene, gegebenenfalls substituierte Kohlenwasserstoffreste mit mindestens 4 Kohlenstoffatomen bedeutet,
$R^1$ gleich oder verschieden sein kann und einwertige, gegebenenfalls substituierte Kohlenwasserstoffreste bedeutet,
$R^2$ gleich oder verschieden sein kann und einwertige, SiC-gebundene, gegebenenfalls substituierte Kohlenwasserstoffreste mit 1 bis 3 Kohlenstoffatomen bedeutet,
a 1, 2 oder 3 ist und
b 0, 1 oder 2 ist, mit der Maßgabe, dass die Summe aus a und b 1, 2 oder 3 ist,
und/oder deren Teilydrolysate sowie
(A2) Siloxane enthaltend Einheiten der Formel

$$R^3_c(R^4O)_dSiO_{(4-c-d)/2} \qquad (II),$$

wobei
$R^3$ gleich oder verschieden sein kann und Wasserstoffatom oder einen einwertigen, SiC-gebundenen, gegebenenfalls substituierten Kohlenwasserstoffrest bedeutet,
$R^4$ gleich oder verschieden sein kann und Wasserstoffatom oder einen einwertigen, gegebenenfalls substituierten Kohlenwasserstoffrest bedeutet,
c 0, 1, 2 oder 3 ist und
d 0, 1, 2 oder 3 ist, mit der Maßgabe, dass
die Summe aus c und d kleiner oder gleich 3 ist,

(B) mindestens einen nichtionischen Emulgator mit einem HLB-Wert größer oder gleich 12 gegebenenfalls im Gemisch mit nichtionischen Emulgatoren mit einem HLB-Wert kleiner 12,
(C) mindestens ein kationisches Tensid ausgewählt aus

(C1) Verbindungen der Formel

$$R^9_eR^6_{(4-e)}N^+ X^- \qquad (III)$$

und
(C2) Verbindungen der Formel

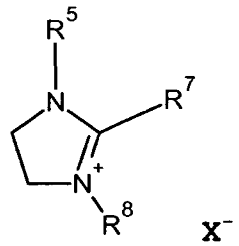

(IV),

wobei
$R^5$ gegebenenfalls substituierte Kohlenwasserstoffreste bedeutet,
$R^6$ gleich oder verschieden sein kann und gegebenenfalls substituierte aliphatische Kohlenwasserstoffreste mit mindestens 10 Kohlenstoffatomen oder gegebenenfalls substituierte aromatische Kohlenwasserstoffreste mit mindestens 6 Kohlenstoffatomen bedeutet,
$R^7$ gegebenenfalls substituierte aliphatische Kohlenwasserstoffreste mit mindestens 10 Kohlenstoffatomen oder gegebenenfalls substituierte aromatische Kohlenwasserstoffreste mit mindestens 6 Kohlenstoffatomen bedeutet,
$R^8$ gegebenenfalls substituierte Kohlenwasserstoffreste bedeutet,
$R^9$ gleich oder verschieden sein kann und gegebenenfalls substituierte Kohlenwasserstoffreste bedeutet,
e 2 oder 3 ist und
$X^-$ ein einwertiges organisches oder anorganisches Anion ist,

(D) Wasser
und gegehenenfalls
(E) weitere Komponenten.

**2.** Wässrige Dispersionen gemäß Anspruch 1, **dadurch gekennzeichnet, dass** es sich bei Komponente (A) um (A1) oder Gemische aus (A1) und (A2) handelt.

**3.** Wässrige Dispersionen gemäß Anspruch 1 oder 2, **dadurch gekennzeichnet, dass** es sich bei Komponente (B) um mindestens einen nichtionischen Emulgator mit einem HLB-Wert größer oder gleich 14 gegebenenfalls im Gemisch mit nichtionischen Emulgatoren mit einem HLB-Wert kleiner 12 handelt.

**4.** Wässrige Dispersionen gemäß einem oder mehreren der Anspruche 1 bis 3, **dadurch gekennzeichnet, dass** als Komponente (B) Mischungen von nichtionogenen Emulgatoren eingesetzt werden, von denen mindestens ein Emulgator einen HLB-Wert größer oder gleich 12 hat.

**5.** Wässrige Dispersionen gemäß einem oder mehreren der Ansprüche 1 bis 4, **dadurch gekennzeichnet, dass** es sich bei Komponente (C) um Benzyltrimethylammoniumverbindungen oder quartäre Imidazoliniumverbindungen handelt.

**6.** Wässrige Dispersionen gemäß einem oder mehreren der Ansprüche 1 bis 5, **dadurch gekennzeichnet, dass** es sich um solche handelt enthaltend

(A) Organosiliciumverbindung (A1) gegebenenfalls im Gemisch mit (A2),
(B) Mischungen von nichtionogenen Emulgatoren, von denen mindestens ein Emulgator einen HLB-Wert größer oder gleich 12 hat,
(C) kationisches Tensid der Formeln (III) und/oder (IV),
(D) Wasser und
gegebenenfalls
(E) weitere Komponenten.

**7.** Wässrige Dispersionen gemäß einem oder mehreren der Ansprüche 1 bis 6, **dadurch gekennzeichnet, dass** es sich um solche handelt enthaltend

(A) 10 bis 60 Gew.-% (A1) und 0 bis 20 Gew.-% (A2),

(B) 1,0 bis 10 Gew.-% Mischungen von nichtionogenen Emulgatoren, von denen mindestens ein Emulgator einen HLB-Wert größer oder gleich 12 hat,
(C) 0,1 bis 5 Gew.-% kationisches Tensid der Formeln (III) und/oder (IV),
(D) Wasser und
gegebenenfalls
(E) weitere Komponenten.

**8.** Verfahren zur Herstellung der Dispersionen gemäß einem oder mehreren der Ansprüche 1 bis 7 durch Vermischen der Komponenten (A), (B), (C), (D) und gegebenenfalls (E).

**9.** Verfahren zur Behandlung von Substraten, **dadurch gekennzeichnet, dass** die Substrate mit den Dispersionen gemäß einem oder mehreren der Ansprüche 1 bis 7 in Kontakt gebracht werden.

**10.** Verfahren gemäß Anspruch 9, **dadurch gekennzeichnet, dass** es sich bei den zu behandelnden Substraten um mineralische Substrate und Holzwerkstoffe handelt.

## Claims

**1.** Aqueous dispersions containing

(A) at least one organosilicon compound selected from

(A1) silanes of the formula

$$R_aR^2_bSi(OR^1)_{4-a-b} \qquad (I),$$

in which
R may be identical or different and are monovalent, SiC-bonded, optionally substituted hydrocarbon radicals having at least 4 carbon atoms,
$R^1$ may be identical or different and are monovalent, optionally substituted hydrocarbon radicals,
$R^2$ may be identical or different and are monovalent, SiC-bonded, optionally substituted hydrocarbon radicals having 1 to 3 carbon atoms,
a is 1, 2 or 3 and
b is 0, 1 or 2, with the proviso that the sum of a and b is 1, 2 or 3,
and/or the partial hydrolysis products thereof, and
(A2) siloxanes containing units of the formula

$$R^3_c(R^4O)_dSiO_{(4-c-d)/2} \qquad (II),$$

in which
$R^3$ may be identical or different and is a hydrogen atom or a monovalent, SiC-bonded, optionally substituted hydrocarbon radical,
$R^4$ may be identical or different and is a hydrogen atom or a monovalent, optionally substituted hydrocarbon radical,
c is 0, 1, 2 or 3 and
d is 0, 1, 2 or 3, with the proviso that the sum of c and d is less than or equal to 3,

(B) at least one nonionic emulsifier having an HLB value greater than or equal to 12, optionally as a mixture with nonionic emulsifiers having an HLB value of less than 12,
(C) at least one cationic surfactant selected from

(C1) compounds of the formula

$$R^9_eR^6_{(4-e)}N^+\ X^- \qquad (III)$$

and
(C2) compounds of the formula

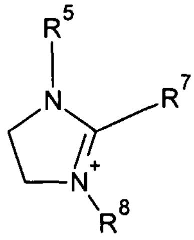

$X^-$ (IV),

in which
$R^5$ are optionally substituted hydrocarbon radicals,
$R^6$ may be identical or different and are optionally substituted aliphatic hydrocarbon radicals having at least 10 carbon atoms or optionally substituted aromatic hydrocarbon radicals having at least 6 carbon atoms,
$R^7$ are optionally substituted aliphatic hydrocarbon radicals having at least 10 carbon atoms or optionally substituted aromatic hydrocarbon radicals having at least 6 carbon atoms,
$R^8$ are optionally substituted hydrocarbon radicals,
$R^9$ may be identical or different and are optionally substituted hydrocarbon radicals,
e is 2 or 3 and
$X^-$ is a monovalent organic or inorganic anion,

(D) water
and optionally
(E) further components.

2. Aqueous dispersions according to Claim 1, **characterized in that** component (A) is (A1) or a mixture of (A1) and (A2).

3. Aqueous dispersions according to Claim 1 or 2, **characterized in that** component (B) is at least one nonionic emulsifier having an HLB value greater than or equal to 14, optionally as a mixture with nonionic emulsifiers having an HLB value of less than 12.

4. Aqueous dispersions according to one or more of Claims 1 to 3, **characterized in that** mixtures of nonionic emulsifiers, of which at least one emulsifier has an HLB value greater than or equal to 12, are used as component (B).

5. Aqueous dispersions according to one or more of Claims 1 to 4, **characterized in that** component (C) is a benzyltrimethylammonium compound or a quaternary imidazolinium compound.

6. Aqueous dispersions according to one or more of Claims 1 to 5, **characterized in that** they are aqueous dispersions containing

(A) organosilicon compound (A1), optionally as a mixture with (A2),
(B) mixtures of nonionic emulsifiers, of which at least one emulsifier has an HLB value greater than or equal to 12,
(C) cationic surfactant of the formulae (III) and/or (IV),
(D) water and
optionally
(E) further components.

7. Aqueous dispersions according to one or more of Claims 1 to 6, **characterized in that** they are aqueous dispersions containing

(A) from 10 to 60% by weight of (A1) and from 0 to 20% by weight of (A2),
(B) from 1.0 to 10% by weight of mixtures of nonionogenic emulsifiers, of which at least one emulsifier has an HLB value greater than or equal to 12,
(C) from 0.1 to 5% by weight of cationic surfactant of the formulae (III) and/or (IV),
(D) water and
optionally
(E) further components.

**8.** Process for the preparation of the dispersions according to one or more of Claims 1 to 7 by mixing the components (A), (B), (C), (D) and optionally (E).

**9.** Process for the treatment of substrates, **characterized in that** the substrates are brought into contact with the dispersions according to one or more of Claims 1 to 7.

**10.** Process according to Claim 9, **characterized in that** the substrates to be treated are mineral substrates and wood-based materials.

**Revendications**

**1.** Dispersions aqueuses contenant

(A) au moins un composé organosilicié choisi parmi

(A1) des silanes de formule

$$R_aR^2_bSi(OR^1)_{4-a-b} \qquad (I)$$

dans laquelle
R peut être le même ou différent et représente des radicaux hydrocarbonés monovalents éventuellement substitués, liés par une liaison SiC, ayant au moins 4 atomes de carbone,
$R^1$ peut être le même ou différent et représente des radicaux hydrocarbonés monovalents éventuellement substitués,
$R^2$ peut être le même ou différent et représente des radicaux hydrocarbonés monovalents éventuellement substitués, liés par une liaison SiC, ayant de 1 à 3 atomes de carbone,
a est 1, 2 ou 3 et
b est 0, 1 ou 2, étant entendu que la somme de a et b est 1, 2 ou 3,
et/ou leurs hydrolysats partiels ainsi que
(A2) des siloxanes contenant des motifs de formule

$$R^3_c(R^4O)_dSiO_{(4-c-d)/2} \qquad (II)$$

dans laquelle
$R^3$ peut être le même ou différent et représente un atome d'hydrogène ou un radical hydrocarboné monovalent, éventuellement substitué, lié par une liaison SiC,
$R^4$ peut être le même ou différent et représente un atome d'hydrogène ou un radical hydrocarboné monovalent, éventuellement substitué,
c est 0, 1, 2 ou 3 et
d est 0, 1, 2 ou 3, étant entendu que
la somme de c et d est inférieure ou égale à 3,

(B) au moins un émulsifiant non ionique ayant un indice HLB (rapport hydrophile-lipophile) supérieur ou égal à 12, éventuellement en mélange avec des émulsifiants non ioniques ayant un indice HLB inférieur à 12,
(C) au moins un tensioactif cationique choisi parmi

(C1) des composés de formule

$$R^9_eR^6_{(4-e)}N^+ X^- \qquad (III)$$

et
(C2) des composés de formule

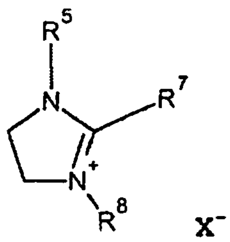

(IV)

dans laquelle
$R^5$ représente des radicaux hydrocarbonés éventuellement substitués,
$R^6$ peut être le même ou différent et représente des radicaux hydrocarbonés aliphatiques éventuellement substitués ayant au moins 10 atomes de carbone ou des radicaux hydrocarbonés aromatiques éventuellement substitués ayant au moins 6 atomes de carbone,
$R^7$ représente des radicaux hydrocarbonés aliphatiques éventuellement substitués ayant au moins 10 atomes de carbone ou des radicaux hydrocarbonés aromatiques éventuellement substitués ayant au moins 6 atomes de carbone,
$R^8$ représente des radicaux hydrocarbonés éventuellement substitués,
$R^9$ peut être le même ou différent et représente des radicaux hydrocarbonés éventuellement substitués,
e est 2 ou 3 et
$X^-$ est un anion organique ou inorganique monovalent,

(D) de l'eau
et éventuellement
(E) d'autres composants.

2. Dispersions aqueuses selon la revendication 1, **caractérisées en ce que** le composant (A) consiste en (A1) ou en des mélanges de (A1) et (A2).

3. Dispersions aqueuses selon la revendication 1 ou 2, **caractérisées en ce que** le composant (B) consiste en au moins un émulsifiant non ionique ayant un indice HLB supérieur ou égal à 14 éventuellement en mélange avec des émulsifiants non ioniques ayant un indice HLB inférieur à 12.

4. Dispersions aqueuses selon une ou plusieurs des revendications 1 à 3, **caractérisées en ce qu'**on utilise comme composant (B) des mélanges d'émulsifiants non ionogènes, dont au moins un émulsifiant a un indice HLB supérieur ou égal à 12.

5. Dispersions aqueuses selon une ou plusieurs des revendications 1 à 4**, caractérisées en ce que** le composant (C) consiste en des composés benzyltriméthylammonium ou des composés imidazolinium quaternaires.

6. Dispersions aqueuses selon une ou plusieurs des revendications 1 à 5, **caractérisées en ce qu'**il s'agit de celles contenant

(A) un composé organosilicié (A1) éventuellement en mélange avec (A2),
(B) des mélanges d'émulsifiants non ionogènes, dont au moins un émulsifiant a un indice HLB supérieur ou égal à 12,
(C) un tensioactif cationique de formules (III) et/ou (IV),
(D) de l'eau et
éventuellement
(E) d'autres composants.

7. Dispersions aqueuses selon une ou plusieurs des revendications 1 à 6, **caractérisées en ce qu'**il s'agit de celles contenant

(A) 10 à 60 % en poids de (A1) et 0 à 20 % en poids de (A2),
(B) 1,0 à 10 % en poids de mélanges d'émulsifiants non ionogènes, dont au moins un émulsifiant a un indice HLB supérieur ou égal à 12,

(C) 0,1 à 5 % en poids d'un tensioactif cationique de formules (III) et/ou (IV),
(D) de l'eau et
éventuellement
(E) d'autres composants.

8. Procédé pour la préparation des dispersions selon une ou plusieurs des revendications 1 à 7, par mélange des composants (A), (B), (C), (D) et éventuellement (E).

9. Procédé pour le traitement de supports, **caractérisé en ce qu'**on met les supports en contact avec les dispersions selon une ou plusieurs des revendications 1 à 7.

10. Procédé selon la revendication 9, **caractérisé en ce que** les supports à traiter consistent en des supports minéraux et des matériaux à base de bois.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1069057 A
- EP 234024 A
- EP 340816 A
- EP 631999 A
- WO 199516752 A
- EP 907622 A
- WO 199522580 A
- EP 1147072 A


### In der Beschreibung aufgeführte Nicht-Patentliteratur


- *Journal of Colloid and Interface Science,* 2006, vol. 298, 441-450
- *Chemie Ingenieur Technik,* 2002, vol. 74 (7), 901-909